# EUROPEAN PATENT SPECIFICATION

(11) **EP 1 551 157 B1**
(45) Date of publication and mention of the grant of the patent: **08.09.2010**
(21) Application number: 04030893.4
(22) Date of filing: 28.12.2004
(51) Int. Cl.: H04M 1/02, H04N 7/14

(54) **Slide-type mobile communication terminal with rotary camera**
Verschiebbares mobiles Kommunikationsendgerät mit drehbarer Kamera
Terminal de communication mobile du type coulissant avec une caméra rotative

(30) Priority: 02.01.2004 KR 2004000034
(43) Date of publication of application: 06.07.2005
(73) Proprietor: SK Teletech Co., Ltd., Seoul 135-984 (KR)
(72) Inventor: Park, Sung-June, Seoul 152-055 (KR)
(74) Representative: Liesegang, Roland

(56) References cited:
- JP-A- 2002 111 835
- US-A1- 2003 064 688

## Description

### BACKGROUND OF THE INVENTION

### 1. Field of the Invention

The present invention relates to a slide-type mobile communication terminal according to the preamble of claim 1. A communication of this type is disclosed in JP 2002-111835 A.

### 2. Description of the Related Art

Generally, conventional mobile communication terminals have only the function of voice communications. However, as communication technology and manufacturing technology of mobile communication terminals have rapidly developed, multifunctional mobile communication terminals have been produced and introduced to the market to meet various demands of consumers. Current mobile communication terminals have various functions, including a game function, an internet search function, an e-mail function, and a payment function, in addition to normal voice communication. Recently, there has been a growing tendency for a camera function to be added to the mobile communication terminals. That is, a camera is mounted to the mobile communication terminal to photograph an object. In addition, one may photograph oneself using the camera of the terminal, and then transmit the image to another person.

Recently, the most commonly used mobile communication terminals are folding-type and slide-type mobile communication terminals which are constructed to have large liquid crystal displays. The folding-type mobile communication terminal equipped with a camera has a problem in that, when a user photographs a subject while looking at the subject, an upper folding part must be opened to expose a liquid crystal display to the outside, thus causing inconvenience to the user. Meanwhile, the slide-type mobile communication terminal equipped with a camera has a disadvantage in that a photographing direction of the camera is fixed in a single direction.

The conventional slide-type mobile communication terminal equipped with the camera will be described by way of example with reference to the accompanying drawings.

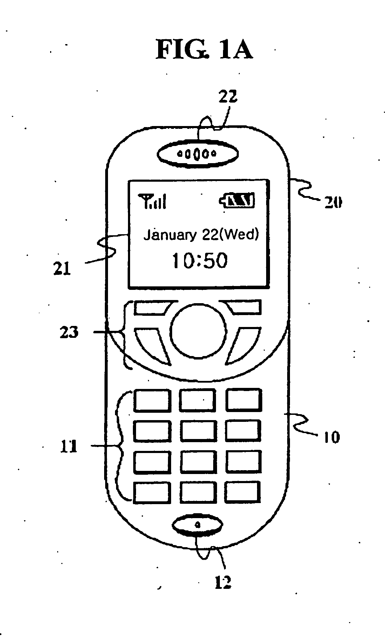

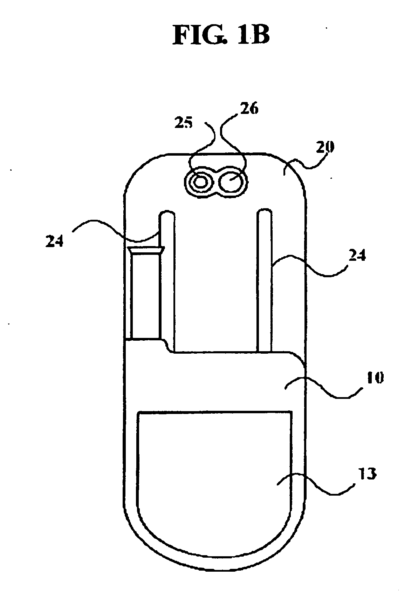

FIG. 1a is a front view of the conventional slide-type mobile communication terminal with the camera, when a front surface of a main body of the terminal is open, and FIG. 1b is a rear view of the conventional slide-type mobile communication terminal shown in FIG. 1a.

As shown in FIGS. 1a and 1b, the conventional slide-type mobile communication terminal with the camera includes a main body 10 and a cover body 20. A keypad 11 and a transmission part 12 are provided on the front surface of the main body 10. The keypad 11 is used to input various characters or numbers, and the transmission part 12 is used to input sound. The cover body 20 is coupled to the front surface of the main body 10 to be superposed thereon, and slides in a direction parallel to the front surface of the main body 10. A liquid crystal display 21 outputting an image, an earpiece 22 outputting sound, and function keys 23 manipulated to perform a desired function are provided on a front surface of the cover body 20.

Thus, when the front surface of the main body 10 is open so that the keypad 11 and the transmission part 12 are exposed to the outside, a user can input a signal using the keypad 11 or make a call using the transmission part 12 and the earpiece 22.

Further, guide rails 24 are provided on a rear surface of the cover body 20 to guide the sliding motion of the cover body 20. Guide grooves (not shown) are provided on the main body 10 at positions corresponding to the guide rails 24 of the cover body 20, and engage with the guide rails 24 when the cover body 20 is coupled to the main body 10. Due to the engagement of the guide grooves with the guide rails 24, the cover body 20 slides along the main body 10. Further, a battery 13 is mounted to the rear surface of the main body 10 to supply electricity to the mobile communication terminal.

A camera 25 and a mirror 26 are provided at an upper end on the rear surface of the cover body 20. The camera 25 serves to take a picture, and the mirror 26 serves to reflect an image photographed by the camera 25.

When the cover body 20 slides to open the front surface of the main body 10, a portion of the rear surface of the cover body 20 is exposed to the outside. The camera 25 and the mirror 26 are mounted on the exposed portion. Thus, when the cover body 20 is disposed to be completely superposed on the front surface of the main body 10, the camera 25 and the mirror 26 are not exposed to the outside.

A general method of using the camera 25 mounted to the slide-type mobile communication terminal is as follows. That is, the cover body 20 is slid up, thus opening the front surface of the main body 10. Next, a user manipulates the keypad 11 provided on the main body 10 so as to take a picture.

When the user desires to photograph other persons or objects using the camera 24 of the mobile communication terminal constructed as described above, a photographing distance or angle can be appropriately adjusted while the user views an image displayed on the liquid crystal display 21. However, when the user desires to take a picture of himself or herself, the mobile communication terminal is positioned so that the rear surface of the cover body 20 faces the user. Since the user must photograph in such a state, the user cannot confirm an image displayed on the liquid crystal display 21. Thereby, it is difficult to adjust a photographing distance or angle.

### SUMMARY OF THE INVENTION

The present invention provides a slide-type mobile communication terminal comprising the features of claim 1.

Accordingly, the present invention has been made keeping in mind the above problems occurring in the prior art, and an object of the present invention is to provide a slide-type mobile communication terminal, which is constructed so a lens of a camera faces forward to allow a user to look at a display in a waiting mode in which a keypad is covered with a cover body, and the lens of the camera faces backward in a call mode in which the cover body slides upward, thus allowing the user to take a picture while the user views the display of the terminal, regardless of whether the user photographs himself/herself, objects or other persons, and allowing a photographing angle of the lens to be easily adjusted by sliding the cover body upward or downward.

In order to accomplish the above object, the present invention provides a slide-type mobile communication terminal with a rotary camera, which includes a main body having a microphone to input voice, a keypad to input a manipulation signal, and a camera seat provided on an upper end of the main body; a cylindrical camera having a pinion gear on at least part of an outer circumference of the camera at a predetermined position, and seating on the camera seat in such a way as to rotate about a coupling shaft of the camera, and taking a picture; and a cover body coupled to a front surface of the main body to be superposed thereon, and sliding in a direction parallel to the front surface of the main body, with a display to output an image and an earpiece to output voice being provided on a front surface of the cover body, and a rack gear being provided on a rear surface of the cover body to engage with the pinion gear, and a notch being provided on a predetermined position of the cover body so that the lens of the camera is exposed to the outside.

Further, the pinion gear engages with the rack gear provided on the rear surface of the cover body to be rotated at an angle of 180° or 540°.

### BRIEF DESCRIPTION OF THE DRAWINGS

The above and other objects, features and advantages of the present invention will be more clearly understood from the following detailed description taken in conjunction with the accompanying drawings, in which:
FIG. 1a is a front view of a conventional slide-type mobile communication terminal with a camera, when a front surface of a main body of the terminal is opened;
FIG. 1b is a rear view of the conventional slide-type mobile communication terminal shown in FIG. 1a;
FIG. 2 is an exploded perspective view of a slide-type mobile communication terminal with a rotary camera, according to the present invention;
FIG. 3 is a perspective view to show a position of a lens of the camera, when the slide-type mobile communication terminal with the rotary camera of this invention is in a waiting mode; and
FIG. 4 is a perspective view to show a position of the lens of the camera, when the slide-type mobile communication terminal with the rotary camera of this invention is in a call mode.

### DESCRIPTION OF THE PREFERRED EMBODIMENTS

Hereinafter, a preferred embodiment will be described in detail for a slide-type mobile communication terminal of the present invention with reference to the accompanying drawings.

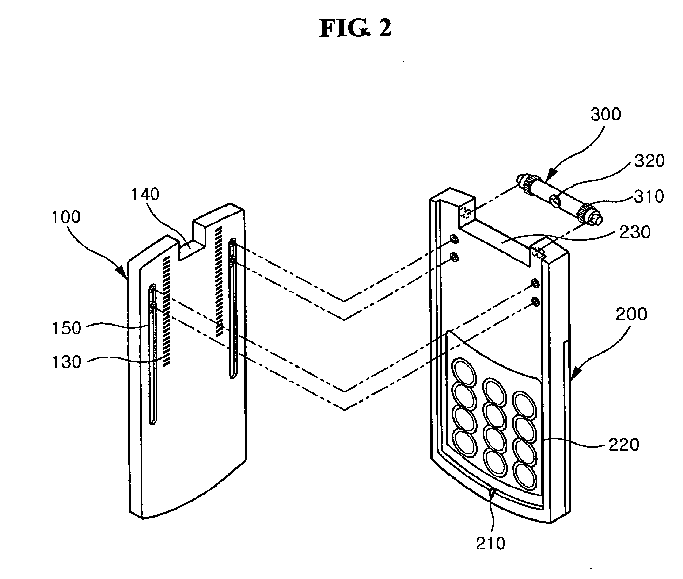

FIG. 2 is an exploded perspective view of a slide-type mobile communication terminal with a rotary camera, according to the present invention.

The slide-type mobile communication terminal of this invention includes a main body 200, a camera 300, and a cover body 100. The main body 200 has a microphone 210, a keypad 220, and a camera seat 230. The microphone 210 is used to input voice, and the keypad 220 is used to input signals. A part of an upper end of the main body 200 is cut to provide the camera seat 230. The camera 300 has a cylindrical shape, with pinion gears 310 provided on part of an outer circumference of the camera 300 at predetermined positions. The camera 300 is seated on the camera seat 230 to rotate about a coupling shaft of the camera 300, and functions to take photographs. The cover body 100 includes rack gears 130 to engage with the pinion gears 310, and a slide module coupled to the main body 200 in such a way as to slide up and down.

The camera seat 230 is provided by cutting a part of the upper end of the main body 200. The camera 300 for taking photographs is rotatably seated on the camera seat 230 to be electrically connected to the main body 200. The pinion gears 310 are provided on part of the outer circumference of the camera 300, and engage with the rack gears 130 of the cover body 100 due to the vertical movement of the cover body 100, thus rotating the camera 300. Further, a part of an upper end of the cover body 100 is cut to provide a notch 140. Thus, the lens 320 of the camera 300 is exposed to the outside of the cover body 100 through the notch 140, thus viewing an object. The number of teeth on the pinion gears 310 and the rack gears 130 is determined according to the rotating angle of the camera 300. That is, according to the number of teeth, the camera 300 may be rotated at an angle of 180° or 540° as the cover body 100 slides upward. However, the rotating angle of the camera 300 is not limited to 180° or 540°. That is, the rotating angle of the camera 300 may be variously changed according to intended purposes.

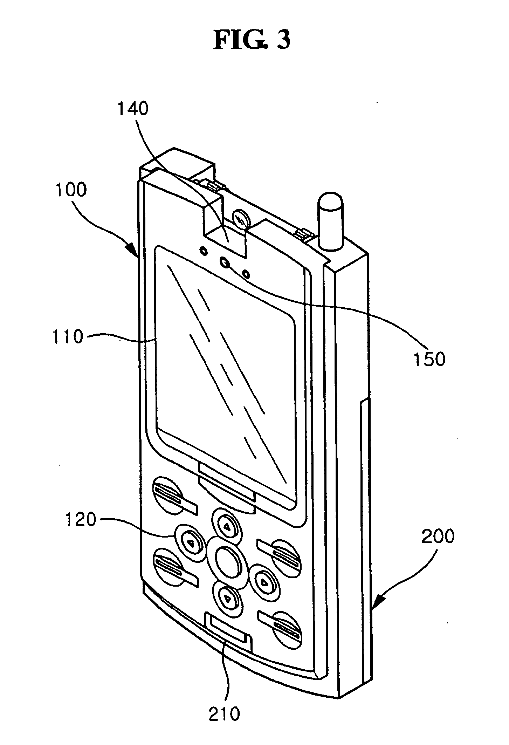

FIG. 3 is a perspective view to show the position of the lens of the camera, when the slide-type mobile communication terminal with the rotary camera of this invention is in a waiting mode.

As shown in the drawing, when the terminal is in the waiting mode where the cover body 100 is closed, the lens 320 of the camera 300 faces forward and is exposed to the outside of the cover body 100 through the notch 140 of the cover body 100. In such a state, when the user holds the mobile communication terminal with his/her hand to take a picture of himself or herself, the user can take a picture while confirming an image displayed on the display 110 of the cover body 100 so as to obtain a desired image.

The cover body 100 is constructed to slide in a direction parallel to the front surface of the main body 200. The cover body 100 is coupled to the main body 200 to be superposed on the front surface of the main body 200. The display 110 for outputting an image, an earpiece 150 for outputting voice, and function keys 120 for performing special functions are provided on a front surface of the cover body 100.

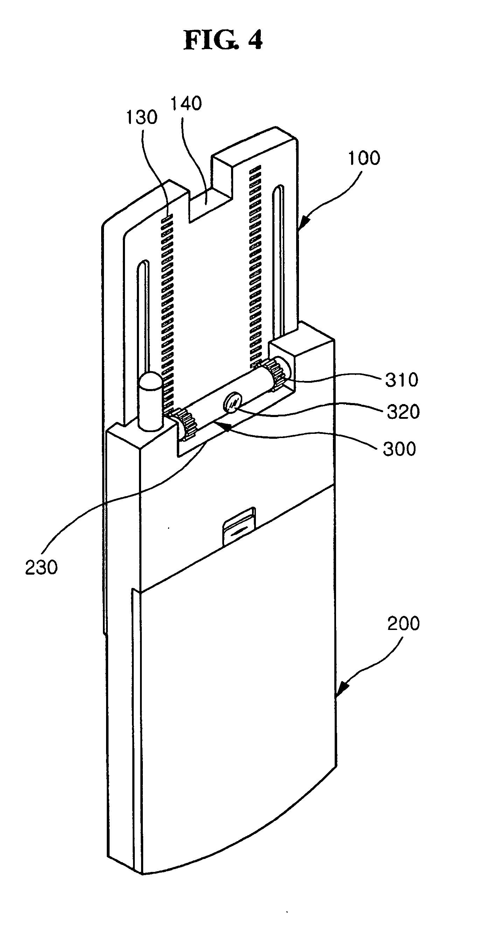

FIG. 4 is a perspective view to show the position of the lens of the camera, when the slide-type mobile communication terminal with the rotary camera of this invention is in a call mode.

As shown in the drawing, when the terminal is in the call mode where the cover body 100 slides upward and the main body 200 is opened, the lens 320 of the camera 300 faces backward. In such a state, when a user holds the mobile communication terminal with his/her hand to take a picture of other persons or objects, the user can take a picture while confirming an image displayed on the display 110 of the cover body 100 so as to obtain a desired image.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

As described above, the present invention provides a slide-type mobile communication terminal with a rotary camera, which is constructed so that a lens of the camera faces forward or backward relative to a display, as a cover body slides downward or upward, thus allowing a user to take a picture while the user looks at the display of the terminal, regardless of whether the user photographs himself/herself, objects or other persons, and allowing a photographing angle of the lens of the camera to be easily adjusted by sliding the cover body upward or downward.

## Claims

1. A slide-type mobile communication terminal, comprising:
a main body (200), comprising:
a microphone (210);
a keypad (220); and
a camera seat (230);
a cover body (100) coupled to the main body (200) to slide along the main body (200); and
a camera (300) rotatably seated on the camera seat (230) via a coupling shaft,
**characterized in that** said camera (300) is adapted to be rotated around said coupling shaft of the camera (300) in response to a sliding motion of the cover body (100).

2. The slide-type mobile communication terminal as set forth in claim 1, wherein the camera seat (230) is provided on an upper portion of the main body (200), and the cover body (100) comprises a notch (140) to allow a lens (320) of the camera (300) to be exposed to a front of the cover body (100) , when the cover body (100) is closed.

3. The slide-type mobile communication terminal as set forth in claim 1 or 2, wherein the camera (300) has a cylindrical shape, with a pinion gear (310) being provided on at least part of an outer circumference of the camera (300) at a predetermined position, and
the cover body (100) has on a rear surface thereof a rack gear (130) to engage with the pinion gear (310).

4. The slide-type mobile communication terminal as set forth in claim 3, wherein the pinion gear (310) engages with the rack gear (130) provided on the rear surface of the cover body (100) and is adapted to be rotated at an angle of 180°.

5. The slide-type mobile communication terminal as set forth in claim 3, wherein the pinion gear (310) engages with the rack gear (130) provided on the rear surface of the cover body (100) and is adapted to be rotated at an angle of 540°.

## Patentansprüche

1. Mobiles Kommunikationsendgerät mit Schub-Mechanismus mit:
einem Hauptkörper (200), welcher umfasst:
ein Mikrofon (210);
eine Tastatur (220); und
einen Kamerasitz (230);
einem Abdeckungskörper (100), der mit dem Hauptkörper (200) gekoppelt ist, um längs des Hauptkörpers (200) zu gleiten; und
einer Kamera (300), die über einen Kopplungsschaft drehbar auf dem Kamerasitz (230) sitzt,
**dadurch gekennzeichnet, dass** die Kamera (300) dazu eingerichtet ist, abhängig von einer Schiebebewegung des Abdeckungskörpers (100) um den Kopplungsschaft der Kamera (300) gedreht zu werden.

2. Mobiles Kommunikationsendgerät mit Schub-Mechanismus nach Anspruch 1, wobei der Kamerasitz (230) auf einem oberen Abschnitt des Hauptkörpers (200) vorgesehen ist und der Abdeckungskörper (100) eine Aussparung (140) aufweist, so dass eine Linse (320) der Kamera (300) an einer Vorderseite des Abdeckungskörpers (100) frei liegen kann, wenn der Abdeckungskörper (100) geschlossen ist.

3. Mobiles Kommunikationsendgerät mit Schub-Mechanismus nach Anspruch 1 oder 2, wobei die Kamera (300) eine zylindrische Form hat, mit einem Ritzel (310), das auf wenigstens einem Teil eines Außenumfangs der Kamera (300) bei einer vorgegebenen Position vorgesehen ist, und
der Abdeckungskörper (100) auf einer Rückseite desselben eine Zahnstange (130) aufweist, die mit dem Ritzel (310) in Eingriff kommt.

4. Mobiles Kommunikationsendgerät mit Schub-Mechanismus nach Anspruch 3, wobei das Ritzel (310) mit der an der Rückseite des Abdeckungskörpers (100) vorgesehenen Zahnstange (130) in Eingriff kommt und dazu eingerichtet ist, um einen Winkel von 180° gedreht zu werden.

5. Mobiles Kommunikationsendgerät mit Schub-Mechanismus nach Anspruch 3, wobei das Ritzel (310) mit der an der Rückseite des Abdeckungskörpers (100) vorgesehenen Zahnstange (130) in Eingriff kommt und dazu eingerichtet ist, um einen Winkel von 540° gedreht zu werden.

## Revendications

1. Terminal de communication mobile du type coulissant, comprenant :
un corps principal (200), comprenant :
un microphone (210) ;
un clavier (220) ; et
un emplacement de caméra (230) ;
un corps de couvercle (100) couplé au corps principal (200) de façon à coulisser le long du corps principal (200) ; et
une caméra (300) montée de façon rotative sur l'emplacement de caméra (230) par l'intermédiaire d'un arbre de liaison, **caractérisé en ce que** ladite caméra (300) est adaptée à tourner autour de l'arbre de liaison de la caméra (300) en réponse à un mouvement coulissant du corps de couvercle (100).

2. Terminal de communication mobile du type coulissant selon la revendication 1, dans lequel l'emplacement de caméra (230) est prévu sur une partie supérieure du corps principal (200), et le corps de couvercle (100) comprend une encoche (140) pour permettre qu'une lentille (320) de la caméra (300) soit exposée à l'avant du corps de couvercle (100), lorsque le corps de couvercle (100) est fermé.

3. Terminal de communication mobile du type coulissant selon la revendication 1 ou 2, dans lequel la caméra (300) a une forme cylindrique, avec un pignon d'engrenage (310) prévu sur au moins une partie d'une périphérie extérieure de la caméra (300) au niveau d'une position prédéterminée, et
Le corps de couvercle (100) comporte, sur une surface arrière de celui-ci, une crémaillère (130) destinée à être en contact avec le pignon d'engrenage (310).

4. Terminal de communication mobile du type coulissant selon la revendication 3, dans lequel le pignon d'engrenage (310) est en contact avec la crémaillère (130) prévue sur la surface arrière du corps de couvercle (100) et est adapté à tourner sur un angle de 180°.

5. Terminal de communication mobile du type coulissant selon la revendication 3, dans lequel le pignon d'engrenage (310) est en contact avec la crémaillère (130) prévue sur la surface arrière du corps de couvercle (100) et est adapté à tourner sur un angle de 540°.
